# EUROPÄISCHE PATENTSCHRIFT

(11) **EP 2 710 159 B1**
(45) Veröffentlichungstag und Bekanntmachung des Hinweises auf die Patenterteilung: **07.11.2018**
(21) Anmeldenummer: 12722143.0
(22) Anmeldetag: 16.05.2012
(51) Int. Cl.: C21D 8/02, C21D 9/56, C21D 9/60, F27B 9/06, F27B 19/04, B21B 1/46

(54) **VERFAHREN UND VORRICHTUNG ZUM AUFBEREITEN VON WALZGUT AUS STAHL VOR DEM WARMWALZEN**
METHOD AND DEVICE FOR PREPARING STEEL MILLED GOODS BEFORE HOT ROLLING
PROCÉDÉ ET DISPOSITIF DE PRÉPARATION DE PRODUITS DE LAMINAGE EN ACIER AVANT LE LAMINAGE À CHAUD

(30) Priorität: 20.05.2011 EP 11166823
(43) Veröffentlichungstag der Anmeldung: 26.03.2014
(73) Patentinhaber: Primetals Technologies Austria GmbH, 4031 Linz (AT)
(72) Erfinder: ECKERSTORFER, Gerald, A-4060 Leonding (AT); HOHENBICHLER, Gerald, A-4484 Kronstorf (AT); LINZER, Bernd, A-4020 Linz (AT)
(74) Vertreter: Metals@Linz
(86) Internationale Anmeldenummer: PCT/EP2012/059132
(87) Internationale Veröffentlichungsnummer: WO 2012/159955

(56) Entgegenhaltungen:
- WO-A1-2010/115698
- US-A- 5 307 864
- US-A1- 2007 113 610
- US-A1- 2008 276 679
- US-A1- 2010 147 484
- US-A1- 2010 212 856
- US-A1- 2010 218 911
- ARVEDI G ET AL: "LATEST RESULTS FROM THE ARVEDI ISP TECHNOLOGY AND PROSPECTS FOR THE NEW ISP-ECR TECHNOLOGY//NEUESTE ERGEBNISSE DER ARVEDI-ISP-TECHNOLOGIE UND AUSSICHTEN FUER DAS NEUE ISP-ECR-VERFAHREN FUER ENDLOSES GIESSWALZEN", STAHL UND EISEN, VERLAG STAHLEISEN, DUSSELDORF, DE, Bd. 123, Nr. 3, 17. März 2003 (2003-03-17) , Seiten 57-65, XP001159537, ISSN: 0340-4803

## Beschreibung

### Gebiet der Technik

Die vorliegende Erfindung betrifft ein Verfahren zum Aufbereiten von Walzgut aus Stahl in einer Gieß-Walz-Verbundanlage vor dem Warmwalzen, umfassend die Schritte Vorwärmen des Walzguts, Entzundern des vorgewärmten Walzguts, Erwärmen des entzunderten Walzguts, und schließlich dem Warmwalzen des Walzguts selbst.

Außerdem betrifft die Erfindung eine Gieß-Walz-Verbundanlage zur Herstellung von Bandstahl mit einer Vorrichtung zum Aufbereiten von Walzgut aus Stahl vor dem Warmwalzen in einer Fertigwalzstraße, umfassend einen ersten Ofen zum Vorwärmen des Walzguts, eine Entzunderungseinrichtung zum Entzundern des vorgewärmten Walzguts, einen zweiten Ofen zum Erwärmen des entzunderten Walzguts und schließlich ein Walzwerk zum Warmwalzen des erwärmten Walzguts selbst.

### Stand der Technik

Aus der WO 2008/000396 A1 ist eine Gieß-Walz-Verbundanlage zur Herstellung von Silizium-Stahl bekannt, mit der das Walzgut in einem Rollenherdofen erwärmt, anschließend entzundert, in einem Induktionsofen auf eine Temperatur größer der Walztemperatur erhitzt, anschließend nochmals entzundert und schließlich warmgewalzt wird.

Nachteilig an diesem Verfahren zur Aufbereitung des Walzguts ist, dass der Rollenherdofen schlecht an rasch wechselnde Betriebsbedingungen, z.B. an die Gießgeschwindigkeiten beim Anfahren bzw. beim Herunterfahrens der Anlage, anpassbar ist, dass das Walzgut zweimal entzundert werden muss, und dass das entzunderte Walzgut im Induktionsofen auf eine Temperatur deutlich über, typischerweise bis zu 100 °C über, der Walztemperatur erhitzt werden muss, bevor es warmgewalzt werden kann. Somit ist das Verfahren aufwändig und vor allem energetisch ineffizient; außerdem ist auch die Anlage aufwändig und weist eine große Baulänge auf.

Aus der US2010212856 A1 ist eine Gieß-Walz-Verbundanlage zur Herstellung von Bandstahl und ein Verfahren zum Aufbereiten von Walzgut aus Stahl in einer Fertigwalzstraße vor dem Warmwalzen bekannt. Die Gieß-Walz-Verbundanlage umfasst eine Vorwalzstraße, einen Halteofen, nachfolgend einen Induktionsofen, und wiederum nachfolgend eine Entzunderungseinrichtung mit einer Fertigwalzstraße.

### Zusammenfassung der Erfindung

Die Aufgabe der Erfindung ist es, die Nachteile des Stands der Technik zu überwinden und ein energieeffizientes Verfahren und eine kompakte Vorrichtung zur Aufbereitung von Walzgut zu finden, mit denen das Walzgut auch bei transienten, rasch wechselnden Geschwindigkeiten zuverlässig und energieeffizient erwärmt und dennoch gründlich entzundert wird.

Diese Aufgabe wird durch ein Verfahren gemäß Anspruch 1 gelöst, das folgende Verfahrensschritte aufweist:
- Vorwärmen des Walzguts in einem ersten Induktionsofen, sodass das vorgewärmte Walzgut mit einer Oberflächentemperatur T₁ ≥ 1000 °C, bevorzugt T₁ ≥ 1050 °C, in eine nachfolgende Entzunderungseinrichtung eintritt; anschließend
- Entzundern des vorgewärmten Walzguts mittels mehrerer Wasserstrahlen in der Entzunderungseinrichtung; unmittelbar anschließend
- Erwärmen des entzunderten Walzguts in einem zweiten Induktionsofen, wobei das entzunderte Walzgut mit einer Temperatur T₂ ≥ T_{Curie} des Walzguts, vorzugsweise T₂ ≥ 900 °C, in den zweiten Induktionsofen eintritt und die Erwärmung im zweiten Induktionsofen in entweder einer weitgehend inerten oder einer weitgehend reduzierenden Schutzgasatmosphäre erfolgt; unmittelbar anschließend
- Warmwalzen des erwärmten Walzguts in einem Walzwerk einer Fertigwalzstraße mit mindestens 3 Walzstichen, wobei das erwärmte Walzgut mit einer Temperatur 1220 °C ≥ T₃ ≥ 1050 °C in das Walzwerk eintritt.

Beim Walzgut kann es sich sowohl um ein Gießprodukt, z.B. mit Brammen-, Dünnbrammen-, Knüppel- oder Vorblock-Querschnitt, als auch um ein gewalztes Flach- oder Langprodukt, z.B. ein sogenanntes Vorband oder einen Vorstreifen, handeln. Häufig handelt es sich beim Walzgut bereits um ein vorgewalztes Produkt, das in einem Vorwalzgerüst oder einer Vorwalzstaffel produziert wurde.

Erfindungsgemäß wird das Walzgut in einem ersten Induktionsofen, der eine inerte bzw. reduzierende Schutzgasatmosphäre aufweisen kann aber nicht muss, auf eine Temperatur T₁ > 1000 °C, bevorzugt T₁ > 1050 °C, vorgewärmt, sodass das vorgewärmte Walzgut mit einer Oberflächentemperatur T₁ > 1000 °C in die nachgelagerte Entzunderungseinrichtung eintritt, wodurch eine gründliche Entzunderung des Walzguts gewährleistet ist. Weist das vorgewärmte Walzgut eine Temperatur > 1050 °C auf, so erfolgt die Entzunderung noch gründlicher, da zusätzlich zum Impuls der Wasserstrahlen ein Temperaturschock auf den Zunder bewirkt wird. Das Entzundern mittels der Entzunderungseinrichtung, die typischerweise aus mehreren, jeweils auf der Ober- und auf der Unterseite über die Breitseite des Walzguts verteilten einzelnen Entzunderungseinheiten (z.B. Einzeldüsen oder Düsenrotoren) besteht, stellt sicher, dass das Walzgut mit einem sehr geringen Zunderbelag in den zweiten Induktionsofen eintritt, wobei die Temperatur des Walzguts im zweiten Induktionsofen ständig höher als die sogenannte Curie-Temperatur T_{Curie} (bei Eisen bzw. Stahl ca. 770 °C), des Walzguts ist. Oberhalb von T_{Curie} verliert das Walzgut die ferromagnetischen bzw. ferroelektrischen Eigenschaften, wodurch eine konstante Permeabilität des Walzguts bei der Erwärmung sichergestellt ist. Es hat sich herausgestellt, dass insbesondere die Leistungselektronik leistungsstarker Induktionsöfen unterhalb des bzw. beim Phasenübergang eines ferromagnetischen Walzguts in dessen paramagnetische Hochtemperaturform geschädigt werden kann, wobei dies beim erfindungsgemäßen Verfahren zuverlässig verhindert wird. Durch das Erwärmen des entzunderten Walzguts im zweiten Induktionsofen, der entweder eine weitgehend inerte oder eine weitgehend reduzierende Schutzgasatmosphäre aufweist, wird das Walzgut auf die Walztemperatur T₃ gebracht, ohne dass dabei eine erhebliche, zusätzliche Zunderschicht entsteht. Schließlich wird das erwärmte und entzunderte Walzgut in einem Walzwerk warmgewalzt, wobei das Walzgut mit einer Temperatur zwischen 1050 °C und 1220 °C in das typischerweise mehrgerüstige Walzwerk eintritt. Durch das einmalige Entzundern weist das erfindungsgemäße Verfahren eine hohe Energieeffizienz auf, sodass z.B. in einer QSP-Anlage die im Tunnelofen aufgenommene Wärme erhalten bleibt, sodass das Walzgut nur wenig zusätzlich vorgewärmt bzw. erwärmt werden muss, und vor allem, da das Walzgut nur einmal entzundert werden muss, da der zweite Induktionsofen mit einer weitgehend inerten oder weitgehend reduzierenden Schutzgasatmosphäre betrieben wird.

Die zweistufige Erwärmung des Walzguts, d.h. das Vorwärmen im ersten Induktionsofen und das Erwärmen im zweiten Induktionsofen, hat den großen Vorteil, dass zwei unterschiedliche Prozessparameter unabhängig voneinander optimal eingestellt werden können. Zum Einen ist eine optimale Einstellung der stahlgüteabhängigen Entzunderungstemperatur möglich; zum Anderen wird das Warmwalzen bei einer optimalen Temperatur durchgeführt, wobei insbesondere die sog. Endwalztemperatur, d.h. die Temperatur beim letzten Walzstich, eine Abhängigkeit von der Anzahl der Walzstiche, dem Durchsatz und der Gesamtdickenreduktion aufweist.

Bei einer besonders energieeffizienten Ausführungsform wird das vorgewärmte Walzgut durch mehrere rotierende Wasserstrahlen aus je einem Rotor einer Rotations-Entzunderungseinrichtung entzundert. Hierbei wird das Walzgut von mehreren rotierenden, schräg gegen die Oberfläche des Warmbands gerichteten Wasserstrahlen eines Rotations-Entzunderers von Zunder befreit, wobei das Wasser im Entzunderer z.B. einen Druck zwischen 200 und 420 bar aufweist.

Aus energetischer Sicht ist es besonders vorteilhaft, wenn das entzunderte Walzgut mit einer Temperatur > 900 °C in den zweiten Induktionsofen eintritt, sodass das Walzgut zum Einen durch das Entzundern nur wenig abgekühlt wird und zum Anderen, das Walzgut in der entweder weitgehend inerten oder weitgehend reduzierenden Schutzgasatmosphäre im zweiten Induktionsofen auch nur wenig stark erwärmt werden muss. Diese Ausführungsform zeichnet sich durch besonders hohe Energieeffizienz aus.

Für eine gleichbleibend hohe Entzunderungswirkung als auch für eine hohe Energieeffizienz ist es vorteilhaft, dass die Temperatur T₁ des vorgewärmten Walzguts vor dem Entzundern mittels einer Temperaturmesseinrichtung erfasst und einem Regler zugeführt wird; und dass der Regler unter Zuhilfenahme eines Regelgesetzes und unter Berücksichtigung einer Soll-Temperatur T_{1 Soll} eine Stellgröße ermittelt und einem Regelorgan zuführt, wobei wenigstens ein Induktor des ersten Induktionsofens so angesteuert wird, dass die Temperatur T₁ des vorgewärmten Walzguts der Soll-Temperatur T_{1 Soll} möglichst entspricht. Dabei kann die Temperaturmesseinrichtung z.B. als ein Pyrometer oder eine Thermokamera ausgeführt sein, wodurch eine berührungslose Temperaturerfassung des Walzguts ermöglicht wird.

Nach einer weiteren vorteilhaften Ausführungsform wird ein Temperaturprofil **T₁** des vorgewärmten Walzguts vor dem Entzundern mittels einer Temperaturprofilmesseinrichtung erfasst und einem Regler zugeführt; der Regler ermittelt unter Zuhilfenahme eines Regelgesetzes und unter Berücksichtigung eines Soll-Temperaturprofils **T_{1 Soll}** eine Stellgröße und führt sie einem Regelorgan zu, wobei wenigstens ein Induktor des ersten Induktionsofens so angesteuert wird, dass das Temperaturprofil **T₁** des vorgewärmten Walzguts dem Soll-Temperaturprofil **T_{1 Soll}** möglichst entspricht. Hierbei kann es sich beim Temperaturprofil um einen Vektor diskreter Temperaturen handeln, sodass das Temperaturprofil fett gedruckt wurde. Mittels dieser Ausführungsform kann eine besonders gleichmäßige Temperaturverteilung im Walzgut und daher eine gleichmäßig hohe Entzunderungsleistung des Walzguts erreicht werden. Hierbei kann die Temperaturprofilmesseinrichtung aus mehreren stationären Temperaturmesseinrichtungen oder z.B. aus einer in quer zur Transportrichtung des Walzguts traversierenden Temperaturmesseinrichtung gebildet werden; auch Thermokameras sind dafür bestens geeignet.

Es ist weiters vorteilhaft, eine Temperatur T₃ des erwärmten und entzunderten Walzguts vor dem Warmwalzen mittels einer Temperaturmesseinrichtung zu erfassen und einem Regler zuzuführen, dass der Regler unter Zuhilfenahme eines Regelgesetzes und unter Berücksichtigung einer Soll-Temperatur T_{3 Soll} eine Stellgröße ermittelt und einem Regelorgan zuführt, wobei wenigstens ein Induktor des zweiten Induktionsofens so angesteuert wird, dass die Temperatur T₃ des erwärmte Walzguts der Soll-Temperatur T_{3 Soll} möglichst entspricht. Hierbei wird die Soll-Walztemperatur hochgenau und zuverlässig auch bei verschiedenen Bandgeschwindigkeiten bzw. Betriebsbedingungen erreicht.

Eine weitere Verbesserung ist möglich, wenn nicht nur eine Temperatur sondern ein (kontinuierliches oder diskretisiertes) Temperaturprofil **T₃** des erwärmten und entzunderten Walzguts vor dem Warmwalzen erfasst wird und einem Regler zugeführt wird. Der Regler ermittelt unter Zuhilfenahme eines Regelgesetzes und unter Berücksichtigung eines Soll-Temperaturprofils **T_{3 Soll}** eine Stellgröße und führt sie einem Regelorgan zu, wobei wenigstens ein Induktor des zweiten Induktionsofens so angesteuert wird, dass das Temperaturprofil **T₃** des erwärmten Walzguts dem Soll-Temperaturprofil **T_{3 Soll}** möglichst entspricht.

Für alle vorgenannten Regelvorgänge sind beispielsweise P-, PI-, PID- oder höherwertige Regler geeignet. Dem Fachmann ist bekannt, dass auch andere Regelgesetze (z.B. Zustandsregler, gegebenenfalls mit einem Zustandsbeobachter) zum Einsatz kommen können.

Zur Verhinderung von Zunderbildung ist es vorteilhaft, wenn der Sauerstoffgehalt der weitgehend inerten Schutzgasatmosphäre < 10% Vol, bevorzugt < 2% Vol, gehalten wird. Als Schutzgas kommt typischerweise Wasserstoff, Stickstoff, Argon oder auch Mischungen dieser Gase zum Einsatz.

Bei einer weitgehend reduzierenden Schutzgasatmosphäre ist es vorteilhaft, wenn der Wasserstoffgehalt zwischen 1 und 5 % Vol, bevorzugt zwischen 3 und 4,5 % Vol, gehalten wird. Bei einer bevorzugten Variante weist das Inertisierungsmedium einen N₂ Gehalt von 95 bis 99 % Vol auf, wobei das Inertisierungsmedium dem Ofenraum zugeführt wird.

Außerdem wird die Aufgabe durch eine Gieß-Walz-Verbundanlage gemäß Anspruch 9 gelöst, aufweisend
- eine Vorwalzstraße,
- ein erster Induktionsofen zum Vorwärmen des vorgewalzten Walzguts auf eine Temperatur T₁ ≥ 1000 °C, wobei der erste Induktionsofen eine Luftatmosphäre aufweist; nachfolgend
- eine Entzunderungseinrichtung zum Entzundern des vorgewärmten Walzguts mittels mehrerer Wasserstrahlen; unmittelbar nachfolgend
- ein zweiter Induktionsofen mit einer weitgehend inerten oder einer weitgehend reduzierenden Schutzgasatmosphäre zum Erwärmen des entzunderten Walzguts auf eine Temperatur 1220 °C ≥ T₃ ≥ 1050 °C ; unmittelbar nachfolgend
- ein Walzwerk der Fertigwalzstraße mit mindestens drei Gerüsten zum Warmwalzen des erwärmten Walzguts.

Die erfindungsgemäße Vorrichtung weist eine geringe Baulänge und geringe Investitionskosten auf. Kombiniert mit der hohen Energieeffizienz des Verfahrens sind geringe Gesamtkosten pro Tonne Stahl bei einer hohen Produktqualität des Warmwalzguts erzielbar.

Es ist vorteilhaft, wenn die Entzunderungseinrichtung jeweils wenigstens eine Rotations-Entzunderungseinrichtung auf der Ober- und auf der Unterseite des Walzguts umfasst.

Es ist weiters vorteilhaft, wenn zwischen dem ersten Induktionsofen und der Entzunderungseinrichtung eine Messeinrichtung, die mit einem Regler verbunden ist, zur Messung einer Temperatur oder eines Temperaturprofil des Walzguts angeordnet ist, wobei der Regler mit wenigsten einem Induktor des ersten Induktionsofens verbunden ist.

Weiters ist es vorteilhaft, wenn zwischen dem zweiten Induktionsofen und dem Warmwalzwerk eine Messeinrichtung, die mit einem Regler verbunden ist, zur Messung einer Temperatur oder eines Temperaturprofil des Walzguts angeordnet ist, wobei der Regler mit wenigsten einem Induktor des zweiten Induktionsofens verbunden ist.

Um die Abkühlung des vorgewärmten Walzguts nach dem ersten Induktionsofen zu minimieren, ist es zweckmäßig, wenn der Abstand zwischen der Austrittsöffnung des ersten Induktionsofens und der Entzunderungseinrichtung max. 7 m, vorzugsweise max. 4 m, beträgt.

Außerdem ist es günstig, dass der Abstand zwischen der Austrittsöffnung des zweiten Induktionsofens und dem Walzspalt des ersten Walzgerüsts des Warmwalzwerks max. 7 m, vorzugsweise max. 4 m, beträgt.

Alternativ zu den letzten zwei Ausführungsformen bzw. gegebenenfalls zusätzlich dazu ist es vorteilhaft, das Walzgut zwischen dem ersten Induktionsofen und dem Entzunderer, aber auch zwischen dem zweiten Induktionsofen und dem Warmwalzwerk mittels einer Thermohaube vor Temperaturverlust zu schützen.

Um die Betriebskosten der Anlage gering zu halten, und da die Kosten für das Inertisierungsmedium eines Induktionsofens wesentlich in die Betriebskosten pro Tonne erzeugtem Stahl eingehen, ist es vorteilhaft, wenn der erste Induktionsofen eine Luftatmosphäre aufweist. Dadurch muss nur das Inertisierungsmedium für den zweiten Induktionsofen bereitgestellt werden.

Besonders vorteilhaft ist es, die erfindungsgemäße Vorrichtung bei einer Gieß-Walz-Verbundanlage zur Herstellung von Bandstahl, z.B. in einer ESP Anlage zwischen der Vorwalzstraße und der Fertigwalzstraße oder in einer ISP Gieß-Walz-Verbundanlage zwischen der beheizbaren Coilbox und der Fertigwalzstraße anzuordnen.

### Kurze Beschreibung der Zeichnungen

Weitere Vorteile und Merkmale der vorliegenden Erfindung ergeben sich aus der nachfolgenden Beschreibung nicht einschränkender Ausführungsbeispiele, wobei auf die folgenden schematischen Figuren Bezug genommen wird, die Folgendes zeigen:
Fig 1: eine ESP Gieß-Walz-Verbundanlage zur vollkontinuierlichen Herstellung von Warmband mit einer Vorrichtung zum Aufbereiten von Walzgut
Fig 2: ein erfindungsgemäßer Temperaturverlauf zu Fig 1 und zwei schematische Temperaturverläufe nach dem Stand der Technik
Fig 3: ein erfindungsgemäßes Regelschema
Fig 4: einen Ausschnitt einer ISP Gieß-Walz-Verbundanlage zur Herstellung von Warmband mit einer erfindungsgemäßen Vorrichtung
Fig 5: eine Warmwalzstraße zum Warmwalzen von Dünnbrammen mit einer Vorrichtung zum Aufbereiten von Walzgut
Fig 6: eine konventionelle Warmwalzstraße zum Warmwalzen von Brammen mit einer Vorrichtung zum Aufbereiten von Walzgut

### Beschreibung der Ausführungsformen

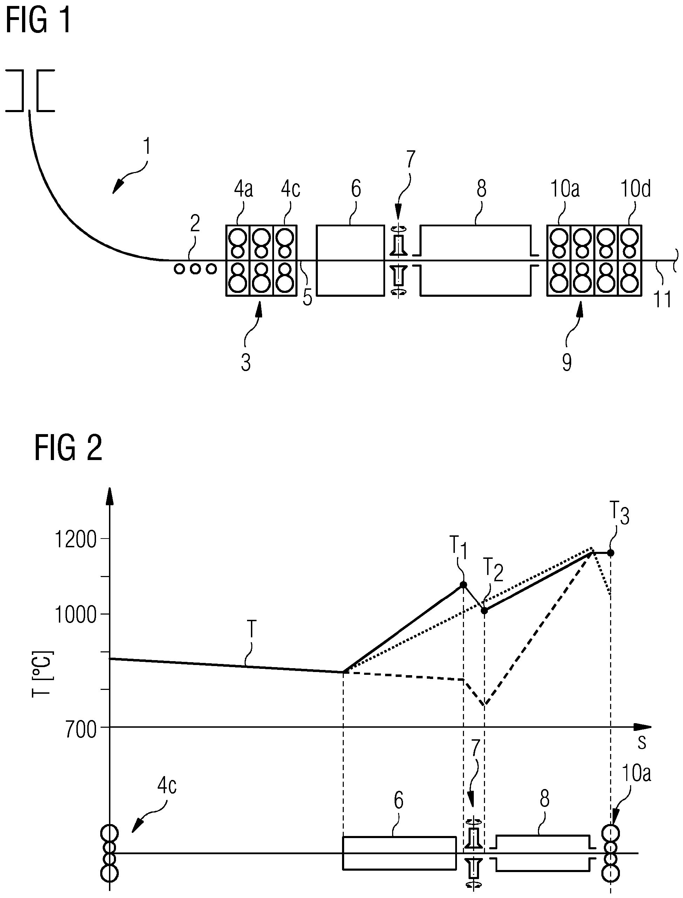

Fig 1 zeigt eine schematische Darstellung einer Gieß-Walz-Verbundanlage zur Herstellung von Bandstahl mit 2200 mm Breite. Die Anlage umfasst
- eine Stranggießmaschine 1 zum Vergießen von Dünnbrammen 2, wobei der teilerstarrte Strang mit einer Dicke von 80 mm aus der Kokille austritt;
- eine nicht näher dargestellte Strangführung zur Liquid Core Reduction (LCR) oder Soft Core Reduction (SCR) der Dünnbramme in der Strangführung auf eine Dicke von 70 mm;
- eine nicht dargestellte Notschere zwischen dem horizontalen Auslaufbereich der Stranggießmaschine 1 und einer Vorwalzstraße 3;
- die Vorwalzstraße 3 mit drei Gerüsten 4a, 4b, 4c zur dreistufigen Reduktion der Dünnbramme auf ein Vorband 5 mit einer Dicke von 13 mm, wobei das Vorband die Vorwalzstraße mit einer Temperatur von 880 °C verlässt; nachfolgend
- ein erster Induktionsofen 6 zum Vorwärmen des Vorbands in einer Luftatmosphäre, wobei das vorgewärmte Vorband mit einer Temperatur von T₁ = 1080 °C in eine nachfolgende Entzunderungseinrichtung 7 eintritt;
- die Entzunderungseinrichtung 7, die aus jeweils mehreren Rotor-Entzunderern auf der Oberseite und der Unterseite des Vorbands besteht, wobei jeder Entzunderer acht Einzeldüsen aufweist und die Wasserstrahlen aus einem Entzunderer schräg auf die Oberfläche des Walzguts auftreffen. Durch das Entzundern wird das Walzgut auf eine Temperatur von T₂ = 1010 °C abgekühlt.
- Direkt nach der Entzunderungseinrichtung 7 wird das Walzgut durch einen zweiten Induktionsofen 8 in einer inerten Atmosphäre bestehend aus 94 % Vol N₂, 5 % Vol 0₂, und 1 % Vol andere Gase (Ar, Xe, Kr, CO, CO₂, H₂), erwärmt, sodass das Walzgut beim Verlassen des zweiten Induktionsofens 8 eine querschnittsgemittelte Temperatur von 1160 °C aufweist.
- Schließlich wird das entzunderte und erwärmte Walzgut in einer viergerüstigen Fertigwalzstraße 9 durch vier Reduktionsschritte auf ein Fertigband 11 mit einer Dicke von 4 mm warmgewalzt. Das Abkühlen, Ablängen und Aufwickeln des Fertigbands wurde aus Gründen der Übersichtlichkeit nicht dargestellt.

Die Fig 2 zeigt die beim Verfahren gemäß Fig 1 auftretenden Temperaturen im Vergleich zu zwei Ausführungsformen nach dem Stand der Technik. Der Verlauf der Temperaturen nach dem erfindungsgemäßen Verfahren wurde durchgezogen, der Verlauf der Temperaturen nach einer ersten Ausführungsform nach dem Stand der Technik wurden strichliert dargestellt. Diese erste Ausführungsform nach dem Stand der Technik stellt eine zu Fig 1 ähnliche Anlage dar, allerdings mit dem Unterschied, dass keine Vorwärmung des Vorbands mittels eines ersten Induktionsofens 6 stattfindet (siehe z.B. EP 1 951 451 B1). Aus dem Diagramm nach Fig 2 geht klar hervor, dass das Walzgut beim Eintritt in die Entzunderungseinrichtung 7 nur mehr eine Temperatur von 830°C aufweist, sodass eine gründliche Entzunderung des Walzguts nicht mehr für alle Stahlgüten möglich ist. Außerdem wird nach dem Stand der Technik das Walzgut durch das Entzundern auf eine Temperatur von 760°C abgekühlt, sodass im zweiten Induktionsofen 8 ein Phasenübergang vom ferromagnetischen in den paramagnetischen Bereich des Walzguts auftritt. Im Gegensatz dazu stellt die Vorerwärmung des Walzguts auf eine Temperatur von 1080 °C im ersten Induktionsofen 6 sicher, dass das Walzgut mit einer Temperatur > 1000 °C in die Entzunderungseinrichtung eintritt; nach der Entzunderung weist das Walzgut nach wie vor eine Temperatur von 1010 °C auf, sodass der leistungsstarke zweite Induktionsofen 8 stets im paramagnetischen Bereich des Walzguts betrieben wird. Dadurch wird eine Schädigung der Induktoren zuverlässig verhindert, was sich auf die Zuverlässigkeit und die Standzeit der Induktoren positiv auswirkt.

Fig 2 zeigt auch eine zweite übliche Verfahrensweise mit punktiertem Temperaturverlauf als Stand der Technik. Diesen Stand der Technik stellt eine zu Fig 1 ähnliche Anlage dar, allerdings mit dem Unterschied, dass das Walzgut nur ein einziges Mal mittels eines Induktionsofens erwärmt wird. Aus dem Diagramm nach Fig 2 geht hervor, dass das Walzgut beim Eintritt in die Entzunderungseinrichtung 7 eine Temperatur von 1180°C aufweist. Die anschließende gründliche Entzunderung des Walzguts bis zum Eintritt in die Fertigstraße führt zu einer Abkühlung um insgesamt 130 K. Also wird das Walzgut durch das Entzundern bis zum Einlauf ins erste Walzgerüst auf eine Temperatur von 1050°C abgekühlt. Der Gesamtenergieverlust durch die Entzunderung ist daher deutlich höher (beinahe doppelt so hoch) als beim erfindungsgemäßen Verfahren.

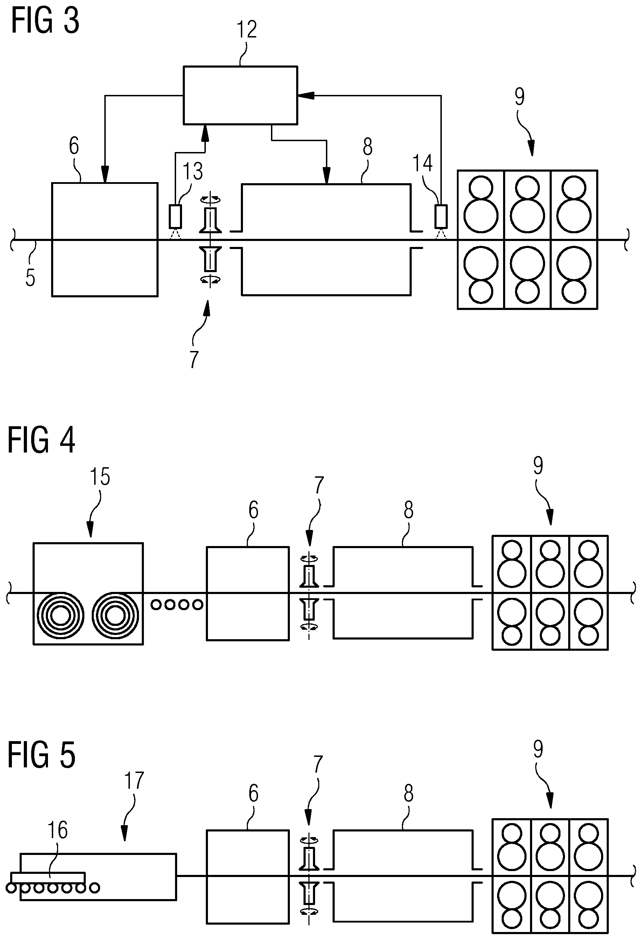

Die Fig 3 zeigt eine Vorrichtung zum Aufbereiten von Walzgut, wobei zusätzlich zur Fig 1 zwischen dem ersten Induktionsofen 6 und der Entzunderungseinrichtung 7 eine Temperaturerfassungseinrichtung 8 und zwischen dem zweiten Induktionsofen 8 und der Warmwalzwerk 9 eine Temperaturprofilerfassungseinrichtung 14 angeordnet ist. Beide Einrichtungen 13,14 sind mit einem Regler 12, der jeweils die Induktoren des ersten und des zweiten Induktionsofens ansteuert, verbunden. Somit stellt der Regler 12 sicher, dass die Temperatur des vorgewärmten Walzguts vor dem Entzundern einer ersten Solltemperatur T_{1_Soll} (i.A. > 1000 °C) und die Temperatur des erwärmten Walzguts vor dem Warmwalzen einer zweiten Solltemperatur T_{2_Soll} (i.A. zwischen 1050 und 1250 °C) beträgt. An dieser Ausführungsform ist besonders vorteilhaft, dass der erste Induktionsofen 6 nur die zusätzliche Energie liefert, um das Walzgut gründlich zu entzundern und das Walzgut mit einer Temperatur > T_{Curie} (bei Stahl ca. 770 °C) in den zweiten Induktionsofen 8 einläuft. Bei höheren Geschwindigkeiten der Stranggießmaschine bzw. des Vorbands 5 wird somit wenig Energie eingebracht; wird allerdings der Gießprozess oder der Vorwalzprozess verlangsamt, so muss das Vorband 5 entsprechend stärker vorgewärmt werden.

Obwohl nicht explizit dargestellt, ist auch eine Variante denkbar, bei der zwischen der Entzunderungseinrichtung 7 und dem zweiten Induktionsofen 8 eine weitere Temperaturerfassungseinrichtung angeordnet ist. In diesem Fall kann somit gezielt auf die Eintrittstemperatur in den zweiten Induktionsofen geregelt werden.

In Fig 4 ist die Aufbereitung von Walzgut in einer ISP Anlage dargestellt. Dabei wird das Warmband mittels einer beheizbaren Coilbox 15 (der sogenannten Cremona-Box) erwärmt und warmgehalten und nach dem Abwickeln dem ersten Induktionsofen 6 zugeführt. Anschließend wird das Warmband in der Entzunderungseinrichtung 7 entzundert und im zweiten Induktionsofen 8 auf Walztemperatur erwärmt.

In Fig 5 ist die Aufbereitung von Walzgut in einer diskontinuierlichen Walzanlage dargestellt. Dabei werden die kalten Brammen 16 zuerst mittels eines Rollenherdofens 17 erwärmt, wobei es in diesem Fall auch möglich ist, Brammen aus einer vorgelagerten mehrsträngigen Stranggießmaschine oder mehreren einsträngigen Stranggießmaschinen (z.B. eine zweisträngige oder zwei einsträngige Maschinen) in den Rollenherdofen 17 einzuführen und dort zu erwärmen. Anschließend werden die Brammen 16 mittels antreibbarer Rollen zuerst in den ersten Induktionsofen 6 eingeführt, dort vorgewärmt, anschließend in der Entzunderungseinrichtung 7 entzundert, im zweiten Induktionsofen 8 auf Walztemperatur erwärmt und schließlich im Warmwalzwerk 9 zu einem Fertigband warmgewalzt.

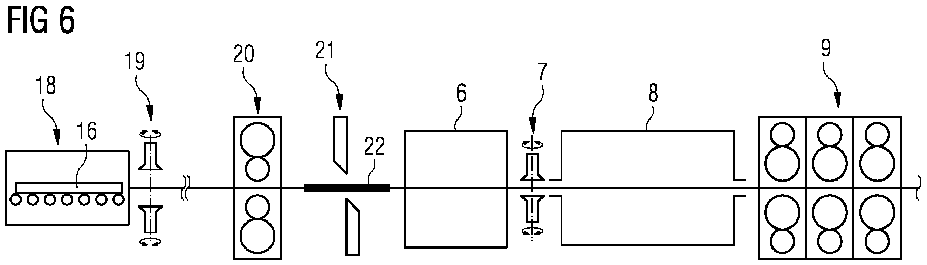

In Fig 6 ist der Einsatz des erfindungsgemäßen Verfahrens bzw. der Vorrichtung beim konventionellen Warmwalzen dargestellt. Wie in der Figur dargestellt, wird gerade eine Bramme 16 mit einer Dicke von 240 mm in einem Stoßherdofen 18 auf eine Temperatur von 1000 °C gebracht, bevor sie direkt nach der Erwärmung mittels eine Primär-Entzunderungseinrichtung 19 entzundert und in einem Reversiergerüst 20 reversierend in 5 oder 7 Stichen vorgewalzt wird. Das durch das Vorwalzen entstehende Zwischenband 22 mit einer Dicke von 25 bis 50 mm, bevorzugt 30 bis 45 mm, wird mittels einer Schopfschere 21 geschöpft, bevor es mit einer Eintrittstemperatur von 850 bis 950 °C in einen ersten Induktionsofen 6 eintritt. Im ersten Induktionsofen 6 wird das Walzgut auf eine Temperatur von 1000 bis 1050 °C vorgewärmt, anschließend mittels der Entzunderungseinrichtung 7 entzundert und dabei auf eine Temperatur von 950 bis 1010 °C abgekühlt. Das vorgewärmte und entzunderte Walzgut tritt unmittelbar anschließend in einen zweiten Induktionsofen 8 ein, wo es auf eine Temperatur von 1050 bis 1150 °C erwärmt wird. Anschließend wird das Walzgut in einer Fertigwalzstraße 9 warmgewalzt, bevor es zu Bunden aufgewickelt wird. Vorteilhaft am erfindungsgemäßen Verfahren ist, dass der Stoßherdofen 18 die Bramme auf eine weit geringere Temperatur von 1000 °C (verglichen mit ca. 1200 °C nach dem Stand der Technik) aufwärmen muss, sodass die Strahlungsverluste - die mit der vierten Potenz der Temperatur eingehen - dramatisch reduziert werden können, sodass der Prozess insgesamt energieeffizienter ablaufen kann.

### Bezugszeichenliste

- 1: Stranggießmaschine
- 2: Dünnbramme
- 3: Vorwalzstraße
- 4a...4c: Gerüst der Vorwalzstraße
- 5: Vorband
- 6: Erster Induktionsofen
- 7: Entzunderungseinrichtung
- 8: Zweiter Induktionsofen
- 9: Warmwalzstraße
- 10a...10d: Gerüst der Warmwalzstraße
- 11: Fertigband
- 12: Regler
- 13: Temperaturerfassungseinrichtung
- 14: Temperaturprofilerfassungseinrichtung
- 15: Beheizbare Coilbox
- 16: Bramme
- 17: Rollenherdofen
- 18: Stoßherdofen
- 19: Primär-Entzunderungseinrichtung
- 20: Reversiergerüst
- 21: Schopfschere
- 22: Zwischenband
- s: Anlagenlänge
- T: Temperatur des Walzguts

## Patentansprüche

1. Verfahren zum Aufbereiten von Walzgut (5,16,22) aus Stahl in einer Gieß-Walz-Verbundanlage vor dem Warmwalzen, umfassend folgende Verfahrensschritte:
- Vorwärmen des Walzguts (5,16,22) in einem ersten Induktionsofen (6) mit einer Luftatmosphäre, sodass das vorgewärmte Walzgut mit einer Oberflächentemperatur T₁ ≥ 1000 °C, bevorzugt T₁ ≥ 1050 °C, in eine nachfolgende Entzunderungseinrichtung (7) eintritt; anschließend
- Entzundern des vorgewärmten Walzguts mittels mehrerer Wasserstrahlen in der Entzunderungseinrichtung (7); unmittelbar anschließend
- Erwärmen des entzunderten Walzguts in einem zweiten Induktionsofen (8), wobei das entzunderte Walzgut mit einer Temperatur T₂ ≥ T_{Curie} des Walzguts, vorzugsweise T₂ ≥ 900 °C, in den zweiten Induktionsofen (8) eintritt und die Erwärmung im zweiten Induktionsofen (8) in entweder einer weitgehend inerten oder weitgehend reduzierenden Schutzgasatmosphäre erfolgt; unmittelbar anschließend
- Warmwalzen des erwärmten Walzguts in einem Walzwerk (9) einer Fertigwalzstraße mit mindestens 3 Walzstichen (10a...10d), wobei das erwärmte Walzgut mit einer Temperatur 1220 °C ≥ T₃ ≥ 1050 °C in das Walzwerk (9) eintritt.

2. Verfahren nach Anspruch 1, **dadurch gekennzeichnet, dass** das vorgewärmte Walzgut durch mehrere rotierende Wasserstrahlen aus je einem Rotor einer Rotations-Entzunderungseinrichtung (7) entzundert wird.

3. Verfahren nach Anspruch 1, **dadurch gekennzeichnet,**
**dass** die Temperatur T₁ des vorgewärmten Walzguts vor dem Entzundern mittels einer Temperaturmesseinrichtung (13) erfasst und einem Regler (12) zugeführt wird; und
**dass** der Regler (12) unter Zuhilfenahme eines Regelgesetzes und unter Berücksichtigung einer Soll-Temperatur T_{1_Soll} eine Stellgröße ermittelt und einem Regelorgan zuführt, wobei wenigstens ein Induktor des ersten Induktionsofens (6) so angesteuert wird, dass die Temperatur T₁ des vorgewärmten Walzguts der Soll-Temperatur T_{1_Soll} möglichst entspricht.

4. Verfahren nach Anspruch 3, **dadurch gekennzeichnet,**
**dass** ein Temperaturprofil **T₁** des vorgewärmten Walzguts vor dem Entzundern mittels einer Temperaturprofilmesseinrichtung (14) erfasst und einem Regler (12) zugeführt wird; und
**dass** der Regler (12) unter Zuhilfenahme eines Regelgesetzes und unter Berücksichtigung eines Soll-Temperaturprofils **T_{1 Soll}** eine Stellgröße ermittelt und einem Regelorgan zuführt, wobei wenigstens ein Induktor des ersten Induktionsofens (6) so angesteuert wird, dass das Temperaturprofil **T₁** des vorgewärmten Walzguts dem Soll-Temperaturprofil **T_{1 Soll}** möglichst entspricht.

5. Verfahren nach Anspruch 1, **dadurch gekennzeichnet,**
**dass** die Temperatur T₃ des erwärmten Walzguts vor dem Warmwalzen mittels einer Temperaturmesseinrichtung (13) erfasst und einem Regler (12) zugeführt wird; und
**dass** der Regler (12) unter Zuhilfenahme eines Regelgesetzes und unter Berücksichtigung einer Soll-Temperatur T_{3 Soll} eine Stellgröße ermittelt und einem Regelorgan zuführt, wobei wenigstens ein Induktor des zweiten Induktionsofens (8) so angesteuert wird, dass die Temperatur des erwärmten Walzguts T₃ der Soll-Temperatur T_{3 Soll} möglichst entspricht.

6. Verfahren nach Anspruch 5, **dadurch gekennzeichnet,**
**dass** ein Temperaturprofil **T₃** des erwärmten Walzguts vor dem Warmwalzen mittels einer Temperaturprofilmesseinrichtung (14) erfasst und einem Regler (12) zugeführt wird; und
**dass** der Regler (12) unter Zuhilfenahme eines Regelgesetzes und unter Berücksichtigung eines Soll-Temperaturprofils **T_{3 Soll}** eine Stellgröße ermittelt und einem Regelorgan zuführt, wobei wenigstens ein Induktor des zweiten Induktionsofens (8) so angesteuert wird, dass das Temperaturprofil **T₃** des erwärmten Walzguts dem Soll-Temperaturprofil **T_{3 Soll}** möglichst entspricht.

7. Verfahren nach Anspruch 1, **dadurch gekennzeichnet, dass** der Sauerstoffgehalt der weitgehend inerten Schutzgasatmosphäre < 10 % Vol, bevorzugt < 2 % Vol, gehalten wird.

8. Verfahren nach Anspruch 1, **dadurch gekennzeichnet, dass** der Wasserstoffgehalt der weitgehend reduzierenden Schutzgasatmosphäre zwischen 1 und 5 % Vol, bevorzugt zwischen 3 und 4,5 % Vol, gehalten wird.

9. Gieß-Walz-Verbundanlage zur Herstellung von Bandstahl mit einer Vorrichtung zum Aufbereiten von Walzgut (5,16,22) aus Stahl vor dem Warmwalzen in einer Fertigwalzstraße, aufweisend:
- eine Vorwalzstraße;
- ein erster Induktionsofen (6) zum Vorwärmen des vorgewalzten Walzguts (5,16,22) auf eine Temperatur T₁ ≥ 1000 °C, wobei der erste Induktionsofen (6) eine Luftatmosphäre aufweist; nachfolgend
- eine Entzunderungseinrichtung (7) zum Entzundern des vorgewärmten Walzguts mittels mehrerer Wasserstrahlen; unmittelbar nachfolgend
- ein zweiter Induktionsofen (8) mit einer weitgehend inerten oder weitgehend reduzierenden Schutzgasatmosphäre zum Erwärmen des entzunderten Walzguts auf eine Temperatur 1220 °C ≥ T₃ ≥ 1050 °C ; unmittelbar nachfolgend
- ein Walzwerk (9) der Fertigwalzstraße mit mindestens drei Gerüsten (10a...10d) zum Warmwalzen des erwärmten Walzguts.

10. Gieß-Walz-Verbundanlage nach Anspruch 9, **dadurch gekennzeichnet, dass** die Entzunderungseinrichtung (7) je wenigstens eine Rotations-Entzunderungseinrichtung auf der Ober- und der Unterseite des Walzguts umfasst.

11. Gieß-Walz-Verbundanlage nach Anspruch 9, **dadurch gekennzeichnet, dass** zwischen dem ersten Induktionsofen (6) und der Entzunderungseinrichtung (7) eine Messeinrichtung (13,14), die mit einem Regler (12) verbunden ist, zur Messung einer Temperatur oder eines Temperaturprofil des Walzguts (5,16,22) angeordnet ist, wobei der Regler (12) mit wenigsten einem Induktor des ersten Induktionsofens (6) verbunden ist.

12. Gieß-Walz-Verbundanlage nach Anspruch 9, **dadurch gekennzeichnet, dass** der Abstand zwischen der Austrittsöffnung des ersten Induktionsofens (6) und der Entzunderungseinrichtung (7) max. 7 m, vorzugsweise max. 4 m, beträgt.

13. Gieß-Walz-Verbundanlage nach Anspruch 9, **dadurch gekennzeichnet, dass** der Abstand zwischen der Austrittsöffnung des zweiten Induktionsofens (8) und dem Walzspalt des ersten Walzgerüsts (10a) des Walzwerks (9) max. 7 m, vorzugsweise max. 4 m, beträgt.

14. Gieß-Walz-Verbundanlage nach einem der Ansprüche 9 bis 13, **dadurch gekennzeichnet, dass** die Vorrichtung in einer ISP Gieß-Walz-Verbundanlage zur Herstellung von Bandstahl zwischen der beheizbaren Coilbox und der Fertigwalzstraße angeordnet ist.

## Claims

1. Method for preparing rolling stock (5,16,22) from steel in a combined casting/rolling plant before hot rolling, comprising the following method steps of:
- preheating the rolling stock (5,16,22) in a first induction furnace (6) having an air atmosphere such that the preheated rolling stock enters a downstream descaling device (7) at a surface temperature T₁ ≥ 1000 °C, preferably T₁ ≥ 1050 °C; subsequently
- descaling the preheated rolling stock by means of a plurality of water jets in the descaling device (7); immediately subsequently
- heating the descaled rolling stock in a second induction furnace (8), the descaled rolling stock entering the second induction furnace (8) at a rolling stock temperature T₂ ≥ T_{Curie}, preferably T₂ ≥ 900 °C, and the descaled rolling stock being heated in the second induction furnace (8) in either a largely inert or a largely reducing protective gas atmosphere; immediately subsequently
- hot rolling the heated rolling stock in a rolling mill (9) of a finishing train with at least three rolling passes (10a...10d), the heated rolling stock entering the rolling mill (9) at a temperature 1220 °C ≥ T₃ ≥ 1050 °C.

2. Method according to claim 1, **characterised in that** the preheated rolling stock is descaled by means of a plurality of rotating water jets, each issued from a rotor of a rotary descaling device (7).

3. Method according to claim 1, **characterised in that** the temperature T₁ of the preheated rolling stock is measured by means of a temperature measuring instrument (13) prior to the descaling and supplied to a controller (12); and
**in that** with the aid of a control law and taking into account a reference temperature T_{1_Ref}, the controller (12) determines a control variable and supplies same to a control element, with at least one inductor of the first induction furnace (6) being driven such that the temperature T₁ of the preheated rolling stock corresponds as closely as possible to the reference temperature T_{1_Ref}.

4. Method according to claim 3, **characterised in that** a temperature profile **T₁** of the preheated rolling stock is measured by means of a temperature profile measuring instrument (14) prior to the descaling and supplied to a controller (12); and
**in that** with the aid of a control law and taking into account a reference temperature profile **T_{1 Ref}**, the controller (12) determines a control variable and supplies same to a control element, with at least one inductor of the first induction furnace (6) being driven such that the temperature profile **T₁** of the preheated rolling stock corresponds as closely as possible to the reference temperature profile **T_{1 Ref}**.

5. Method according to claim 1, **characterised in that** the temperature T₃ of the heated rolling stock is measured by means of a temperature measuring instrument (13) prior to the hot rolling and supplied to a controller (12); and
**in that** with the aid of a control law and taking into account a reference temperature T_{3 Ref}, the controller (12) determines a control variable and supplies same to a control element, with at least one inductor of the second induction furnace (8) being driven such that the temperature of the heated rolling stock T₃ corresponds as closely as possible to the reference temperature T_{3 Ref}.

6. Method according to claim 5, **characterised in that** a temperature profile **T₃** of the heated rolling stock is measured by means of a temperature profile measuring instrument (14) prior to the hot rolling and supplied to a controller (12); and
**in that** with the aid of a control law and taking into account a reference temperature profile **T_{3 Ref}**, the controller (12) determines a control variable and supplies same to a control element, with at least one inductor of the second induction furnace (8) being driven such that the temperature profile **T₃** of the heated rolling stock corresponds as closely as possible to the reference temperature profile **T_{3 Ref}.**

7. Method according to claim 1, **characterised in that** the oxygen content of the largely inert protective gas atmosphere is held at < 10 % vol, preferably < 2 % vol.

8. Method according to claim 1, **characterised in that** the hydrogen content of the largely reducing protective gas atmosphere is held between 1 and 5 % vol, preferably between 3 and 4.5 % vol.

9. Combined casting/rolling plant for producing steel strip with an apparatus for preparing rolling stock (5,16,22) from steel before hot rolling in a finishing train, comprising:
- a roughing train;
- a first induction furnace (6) for preheating the pre-rolled rolling stock (5,16,22) to a temperature T₁ ≥ 1000 °C, wherein the first induction furnace (6) has an air atmosphere; followed by
- a descaling device (7) for descaling the preheated rolling stock by means of a plurality of water jets; immediately followed by
- a second induction furnace (8) having a largely inert or largely reducing protective gas atmosphere for heating the descaled rolling stock to a temperature 1220 °C ≥ T₃ ≥ 1050 °C; immediately followed by
- a rolling mill (9) of the finishing train having at least three stands (10a...10d) for hot rolling the heated rolling stock.

10. Combined casting/rolling plant according to claim 9, **characterised in that** the descaling device (7) includes at least one rotary descaling device in each case on the top and bottom side of the rolling stock.

11. Combined casting/rolling plant according to claim 9, **characterised in that** a measuring instrument (13,14) which is connected to a controller (12) is arranged between the first induction furnace (6) and the descaling device (7) for the purpose of measuring a temperature or a temperature profile of the rolling stock (5,16,22), the controller (12) being connected to at least one inductor of the first induction furnace (6).

12. Combined casting/rolling plant according to claim9, **characterised in that** the distance between the outlet opening of the first induction furnace (6) and the descaling device (7) is max. 7 m, preferably max. 4 m.

13. Combined casting/rolling plant according to claim 9, **characterised in that** the distance between the outlet opening of the second induction furnace (8) and the roll gap of the first rolling stand (10a) of the rolling mill (9) is max. 7 m, preferably max. 4 m.

14. Combined casting/rolling plant according to one of claims 9 to 13, **characterised in that** in a combined ISP casting/rolling plant for producing strip steel the apparatus is arranged between the heatable coilbox and the finishing train.

## Revendications

1. Procédé pour la préparation d'un produit de laminage (5, 16, 22) en acier dans une installation combinée de laminage et de coulée continue avant le laminage à chaud, comportant les étapes de procédé suivantes :
- préchauffage du produit de laminage (5, 16, 22) dans un premier four à induction (6) avec une atmosphère d'air, de telle sorte que le produit de laminage préchauffé entre dans un dispositif de décalaminage (7) subséquent avec une température de surface T₁ ≥ 1 000 °C, de préférence T₁ ≥ 1 050 °C ; puis
- décalaminage du produit de laminage préchauffé au moyen de plusieurs jets d'eau dans le dispositif de décalaminage (7) ; puis immédiatement
- chauffage du produit de laminage décalaminé dans un deuxième four à induction (8), dans lequel le produit de laminage décalaminé entre dans le deuxième four à induction (8) avec une température T₂ ≥ T_{Curie} du produit de laminage, de préférence T₂ ≥ 900 °C, et le chauffage dans le deuxième four à induction (8) s'effectue dans une atmosphère gazeuse protectrice soit essentiellement inerte, soit essentiellement réductrice ; puis immédiatement
- laminage à chaud du produit de laminage chauffé dans un laminoir (9) d'un train de laminage de finition avec au moins 3 passes de laminage (10a ... 10d), dans lequel le produit de laminage chauffé entre dans le laminoir (9) avec une température 1 220 °C ≥ T₃ ≥ 1 050 °C.

2. Procédé selon la revendication 1, **caractérisé en ce que** le produit de laminage préchauffé est décalaminé par plusieurs jets d'eau rotatifs issus chacun d'un rotor d'un dispositif de décalaminage à rotation (7).

3. Procédé selon la revendication 1, **caractérisé**
**en ce que** la température T₁ du produit de laminage préchauffé avant le décalaminage est détectée au moyen d'un dispositif de mesure de température (13) et est fournie à un régulateur (12) ; et
**en ce que** le régulateur (12) détermine à l'aide d'une loi de régulation et en prenant en compte une température théorique T_{1_Théorique} une grandeur de réglage et la fournit à un organe de régulation, dans lequel au moins un inducteur du premier four à induction (6) est commandé de telle sorte que la température T₁ du produit de laminage préchauffé corresponde autant que possible à la température théorique T_{1_Théorique}.

4. Procédé selon la revendication 3, **caractérisé**
**en ce qu'**un profil de température **T₁** du produit de laminage préchauffé avant le décalaminage est détecté au moyen d'un dispositif de mesure de profil de température (14) et est fourni à un régulateur (12) ; et
**en ce que** le régulateur (12) détermine à l'aide d'une loi de régulation et en prenant en compte un profil de température théorique **T_{1 Théorique}** une grandeur de réglage et la fournit à un organe de régulation, dans lequel au moins un inducteur du premier four à induction (6) est commandé de telle sorte que le profil de température **T₁** du produit de laminage préchauffé corresponde autant que possible au profil de température théorique **T_{1 Théorique}**.

5. Procédé selon la revendication 1, **caractérisé**
**en ce que** la température T₃ du produit de laminage chauffé avant le laminage à chaud est détectée au moyen d'un dispositif de mesure de température (13) et est fournie à un régulateur (12) ; et
**en ce que** le régulateur (12) détermine à l'aide d'une loi de régulation et en prenant en compte une température théorique T_{3 Théorique} une grandeur de réglage et la fournit à un organe de régulation, dans lequel au moins un inducteur du deuxième four à induction (8) est commandé de telle sorte que la température T₃ du produit de laminage chauffé corresponde autant que possible à la température théorique T_{3 Théorique}.

6. Procédé selon la revendication 5, **caractérisé**
**en ce qu'**un profil de température **T₃** du produit de laminage chauffé avant le laminage à chaud est détecté au moyen d'un dispositif de mesure de profil de température (14) et est fourni à un régulateur (12) ; et
**en ce que** le régulateur (12) détermine à l'aide d'une loi de régulation et en prenant en compte un profil de température théorique **T_{3 Théorique}** une grandeur de réglage et la fournit à un organe de régulation, dans lequel au moins un inducteur du deuxième four à induction (8) est commandé de telle sorte que le profil de température **T₃** du produit de laminage chauffé corresponde autant que possible au profil de température théorique **T_{3 Théorique}**.

7. Procédé selon la revendication 1, **caractérisé en ce que** la teneur en oxygène de l'atmosphère gazeuse protectrice essentiellement inerte est maintenue < 10 % en volume, de préférence < 2 % en volume.

8. Procédé selon la revendication 1, **caractérisé en ce que** la teneur en hydrogène de l'atmosphère gazeuse protectrice essentiellement réductrice est maintenue entre 1 et 5 % en volume, de préférence entre 3 et 4,5 % en volume.

9. Installation combinée de laminage et de coulée continue pour la production d'un feuillard d'acier avec un dispositif pour la préparation d'un produit de laminage (5, 16, 22) en acier avant le laminage à chaud dans un train de laminage de finition, comprenant :
- un train de prélaminage ;
- un premier four à induction (6) pour le préchauffage du produit de laminage (5, 16, 22) prélaminé à une température T₁ ≥ 1 000 °C, dans laquelle le premier four à induction (6) comprend une atmosphère d'air ; puis
- un dispositif de décalaminage (7) pour le décalaminage du produit de laminage préchauffé au moyen de plusieurs jets d'eau ; puis immédiatement
- un deuxième four à induction (8) avec une atmosphère gazeuse protectrice essentiellement inerte ou essentiellement réductrice pour le chauffage du produit de laminage décalaminé à une température 1 220 °C ≥ T₃ ≥ 1 050 °C ; puis immédiatement
- un laminoir (9) du train de laminage de finition avec au moins trois cages (10a ... 10d) pour le laminage à chaud du produit de laminage chauffé.

10. Installation combinée de laminage et de coulée continue selon la revendication 9, **caractérisée en ce que** le dispositif de décalaminage (7) comporte au moins un dispositif de décalaminage à rotation respectivement sur la face supérieure et la face inférieure du produit de laminage.

11. Installation combinée de laminage et de coulée continue selon la revendication 9, **caractérisée en ce qu'**entre le premier four à induction (6) et le dispositif de décalaminage (7) est disposé un dispositif de mesure (13, 14), lequel est relié à un régulateur (12), pour la mesure d'une température ou d'un profil de température du produit de laminage (5, 16, 22), dans laquelle le régulateur (12) est relié à au moins un inducteur du premier four à induction (6).

12. Installation combinée de laminage et de coulée continue selon la revendication 9, **caractérisée en ce que** la distance entre l'ouverture de sortie du premier four à induction (6) et le dispositif de décalaminage (7) s'élève au maximum à 7 m, de préférence au maximum à 4 m.

13. Installation combinée de laminage et de coulée continue selon la revendication 9, **caractérisée en ce que** la distance entre l'ouverture de sortie du deuxième four à induction (8) et la fente de laminage de la première cage de laminage (10a) du laminoir (9) s'élève au maximum à 7 m, de préférence au maximum à 4 m.

14. Installation combinée de laminage et de coulée continue selon l'une des revendications 9 à 13, **caractérisée en ce que** le dispositif est disposé dans une installation combinée de laminage et de coulée continue ISP pour la production d'un feuillard d'acier entre la bobineuse pouvant être chauffée et le train de laminage de finition.
